# EUROPÄISCHE PATENTSCHRIFT

(11) **EP 3 894 818 B1**
(45) Veröffentlichungstag und Bekanntmachung des Hinweises auf die Patenterteilung: **01.02.2023**
(21) Anmeldenummer: 19817252.0
(22) Anmeldetag: 06.12.2019
(51) Int. Cl.: G01L 5/00, G01N 3/08, G01N 35/10

(54) **KRAFTMESSANORDNUNG, KRAFTMESSVORRICHTUNG MIT EINER SOLCHEN KRAFTMESSANORDNUNG UND VERFAHREN MIT EINER SOLCHEN KRAFTMESSANORDNUNG**
FORCE MEASURING ARRANGEMENT, FORCE MEASURING APPARATUS HAVING SUCH A FORCE MEASURING ARRANGEMENT, AND METHOD USING SUCH A FORCE MEASURING ARRANGEMENT
ENSEMBLE DE MESURE DE FORCE, DISPOSITIF DE MESURE DE FORCE COMPRENANT UN ENSEMBLE DE MESURE DE FORCE DE CE TYPE ET PROCÉDÉ AVEC UN ENSEMBLE DE MESURE DE FORCE DE CE TYPE

(30) Priorität: 10.12.2018 DE 102018221337
(43) Veröffentlichungstag der Anmeldung: 20.10.2021
(73) Patentinhaber: Vetter Pharma-Fertigung GmbH & Co. KG, 88212 Ravensburg (DE)
(72) Erfinder: WOLFF, Michael, 88167 Gestratz (DE)
(74) Vertreter: Kordel, Mattias
(86) Internationale Anmeldenummer: PCT/EP2019/083931
(87) Internationale Veröffentlichungsnummer: WO 2020/120300

(56) Entgegenhaltungen:
- WO-A1-99/32870
- WO-A2-2012/119118
- DE-A1-102013 001 561
- US-A1- 2016 011 083

## Beschreibung

Die Erfindung betrifft eine Kraftmessanordnung insbesondere zum Beaufschlagen eines Probenkörpers mit einem Prüfparameter und/oder zum Messen einer von dem Probenkörper entgegengebrachten Widerstandskraft, eine Kraftmessvorrichtung mit einer solchen Kraftmessanordnung sowie ein Verfahren mit einer solchen Kraftmessanordnung.

Kraftmessanordnungen und Verfahren mit einer solchen Kraftmessanordnung sind bereits bekannt. Diese umfassen ein verlagerbar gelagertes Kraftaufnahmeelement, insbesondere eine Kraftmessdose, zum Ermitteln einer Kraft, welche zwischen zwei Kraftaufnahmebereichen des Kraftaufnahmeelements wirkt. Dabei wird das Kraftaufnahmeelement über einen ersten Kraftaufnahmebereich mit einer Kraft in eine Beaufschlagungsrichtung beaufschlagt, wodurch üblicherweise eine Bewegung des Kraftaufnahmeelements in Richtung eines Probenkörpers bewirkt wird. Zur Wechselwirkung mit dem Probenkörper ist das Kraftaufnahmeelement über einen zweiten Kraftaufnahmebereich mit einem Kraftübertragungselement verbunden, sodass bei der Wechselwirkung mit dem Probenkörper, insbesondere durch direkten Kontakt des Kraftübertragungselements mit dem Probenkörper, eine von dem Probenkörper ausgehende Widerstandskraft bewirkt, welche über den zweiten Kraftaufnahmebereich in das Kraftaufnahmeelement eingeleitet wird und der über den ersten Kraftaufnahmebereich eingeleiteten Kraft entgegenwirkt. Das Kraftaufnahmeelement ist dabei eingerichtet, um die zwischen den beiden Kraftaufnahmebereichen wirkende Relativkraft zu messen. Unter Kenntnis der über den ersten Kraftaufnahmebereich einwirkenden Kraft und durch Messung der auf das Kraftaufnahmeelement wirkenden Relativkraft kann somit die von dem Probenkörper bewirkte Widerstandskraft gemessen werden. Dokument WO2012/119118 A2 offenbart eine Probenahme mit einem Hall-Effekt Sensor nach dem Stand der Technik.

Verbindungselemente, insbesondere das Kraftübertragungselement und der Befestigung des Kraftübertragungselements an dem zweiten Kraftaufnahmebereich dienende Adapterelemente, zwischen dem zweiten Kraftaufnahmebereich und dem Probenkörper sind dabei - zumindest gegenüber der bewirkten Relativkraft - starr ausgebildet, sodass diese unter einer Belastung weder elastisch noch plastisch signifikant nachgeben.

Typischerweise ist das Kraftübertragungselement mittels eines Stifts an einem solchen Adapterelement gehalten, wobei das Adapterelement an den zweiten Kraftaufnahmebereich angeschraubt ist. Um das Kraftübertragungselement an dem Adapter zu halten, wird der Stift durch eine Durchführung in dem Kraftübertragungselement und eine weitere damit fluchtende Durchführung in dem Adapter hindurchgesteckt, und von dem Adapterelement ausgehend mittels einer Rändelschraube mit einer Presskraft derart beaufschlagt, dass das Kraftübertragungselement mit einer Innenseite der Durchführung des Kraftübertragungselements gegen den Stift gepresst wird, sodass das Kraftübertragungselement sicher, insbesondere klemmend an dem Adapterstück gehalten ist. Insbesondere bei einer Kraftmessung in einem Medikamentenbehälter sind die beteiligten Bauteile der Kraftmessanordnung sehr klein ausgebildet, damit diese in den Medikamentenbehälter eindringen können und insbesondere ein darin angeordnetes Stopfenelements zu beaufschlagen. Aufgrund dieser Dimensionierung der Kraftmessanordnung und des dadurch bedingten kleinen Stifts geht der Stift beim Handhaben der Kraftmessanordnung oftmals verloren, sodass ein entsprechendes Ersatzteil benötigt wird. Zudem ist ein zusätzlicher Arbeitsschritt zum Fixieren des Kraftübertragungselements, nämlich das Betätigen der Rändelschraube, notwendig. Auch ist das Kraftübertragungselement insbesondere in lateraler Richtung, also quer, insbesondere senkrecht, zu der Beaufschlagungsrichtung anfällig für Verkippungen, wodurch eine Kraftmessung verfälscht wird.

Zudem ist das Kraftaufnahmeelement in dem ersten Kraftaufnahmebereich mittels einer zentralen mit der Beaufschlagungsrichtung fluchtenden Schraube mit einer Adapterplatte verschraubt. Hierbei kommt es zu weiteren Ungenauigkeiten.

Die Adapterplatte ihrerseits ist über einen Winkel an einem Schlittenteil eines Kraftmessturms befestigt, wobei der Winkel die Adapterplatte in horizontaler Richtung beabstandet zu dem Kraftmessturm hält. Das Schlittenteil ist entlang des Kraftmessturms verlagerbar, sodass die Adapterplatte und damit das Kraftaufnahmeelement in Erstreckungsrichtung des Kraftmessturms, also in vertikaler Richtung, verlagert werden kann. Durch eine solche Verlagerung, insbesondere eine Verlagerung nach unten, kann ein Probenkörper mittels des Kraftübertragungselements mit einem Prüfparameter beaufschlagt werden. Auch die Befestigung zwischen Adapterplatte und Kraftmessturm über den Winkel ist typischerweise mittels eines Stiftes realisiert, wodurch es auch an dieser Stelle zu Ungenauigkeiten bei der Messung kommt.

Insbesondere bei Kraftmessungen in oder an Medikamentenbehältem ist die Genauigkeit wichtig und bereits äußerst kleine Ungenauigkeiten führen dazu, dass die Kraftmessung wiederholt werden muss. Die bekannten Kraftmessanordnungen genügen diesen hohen Genauigkeitsanforderungen nicht ausreichend.

Aufgabe der Erfindung ist es, eine Kraftmessanordnung zu schaffen, wobei die genannten Nachteile vermieden sind.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem eine Kraftmessanordnung insbesondere zum Beaufschlagen eines Probenkörpers mit einem Prüfparameter und/oder zum Messen einer von dem Probenkörper entgegengebrachten Widerstandskraft, geschaffen wird, welche zumindest ein Kraftaufnahmeelement, eine erste Befestigungseinrichtung und ein Kraftübertragungselement aufweist, wobei das Kraftaufnahmeelement mittels der ersten Befestigungseinrichtung an einer Kraftmesseinrichtung verlagerbar befestigbar, insbesondere befestigt ist, wobei das Kraftaufnahmeelement eingerichtet ist, um eine zwischen zwei Kraftaufnahmebereichen, nämlich einen ersten Kraftaufnahmebereich und einem zweiten Kraftaufnahmebereich, wirkende Relativkraft zu messen, wobei die erste Befestigungseinrichtung über den ersten Kraftaufnahmebereich mit dem Kraftaufnahmeelement kraftübertragungstechnisch verbindbar ist, wobei der zweite Kraftaufnahmebereich mit dem Kraftübertragungselement mittels einer zweiten Befestigungseinrichtung kraftübertragungstechnisch verbindbar ist, wobei das Kraftübertragungselement eingerichtet ist, um einen Probenkörper mit einem Prüfparameter zu beaufschlagen. Die Kraftmessanordnung zeichnet sich dadurch aus, dass die zweite Befestigungseinrichtung einen Magneten aufweist, welcher eingerichtet ist, um das Kraftübertragungselement - zumindest in einem kraftübertragungstechnisch mit dem zweiten Kraftaufnahmebereich verbundenen Zustand - zu halten. Somit ist ein einfacher Befestigungsmechanismus geschaffen, welcher insbesondere ohne Schrauben oder andere entsprechend aufwändige Arbeitsschritte das Kraftübertragungselement mit dem Kraftaufnahmeelement kraftübertragungstechnisch verbindet. Dadurch sind insbesondere abgerundete Anlageflächen, wie diese im Bereich einer Umfangsfläche einer Schraube und/oder eines Stifts auftreten, vermieden. Dadurch ist auch die Stabilität der Kraftmessanordnung hoch.

Unter einem Kraftaufnahmeelement wird insbesondere eine Messeinrichtung verstanden, welche mittels eines Sensors eingerichtet ist, um eine Zug- und/oder Druckkraft zwischen dem ersten Kraftaufnahmebereich und dem zweiten Kraftaufnahmebereich zu messen. Vorzugsweise ist das Kraftaufnahmeelement als Kraftmessdose ausgebildet.

Unter einem Kraftübertragungselement wird hier insbesondere ein Element verstanden, welches aus einem starren, also bei bestimmungsgemäßer Verwendung der Kraftmessanordnung unnachgiebigen Material besteht oder zumindest mittels eines solchen Materials eine Verbindung zwischen dem zweiten Kraftaufnahmebereich und einem Beaufschlagungspunkt, welcher eingerichtet ist, um bei bestimmungsgemäßer Verwendung der Kraftmessanordnung mit dem Probenkörper in Eingriff zu treten, schafft.

Das Kraftübertragungselement ist vorzugsweise als Stange und/oder Stößel ausgebildet, welcher ausgebildet ist, um in den Probenkörper, insbesondere in einen zylindrischen Hohlkörper, einzudringen. Zum Beaufschlagen des Probenkörpers weist das Kraftübertragungselement vorzugsweise eine den Beaufschlagungspunkt aufweisende Stirnfläche auf, welche vorzugsweise eben ausgebildet und bei bestimmungsgemäßer Montage in der Kraftmessanordnung und einer entsprechend bestimmungsgemäßer Montage des Probenkörpers in der Kraftmessanordnung dem Probenkörper derart zugewandt ist, dass die Stirnfläche parallel zu einer Beaufschlagungsfläche des Probenkörpers angeordnet ist.

Unter einem Prüfparameter werden hier insbesondere eine Kraft, ein Impuls, eine Geschwindigkeit, eine Masse und/oder eine Wirkzeit verstanden. Wichtig ist, dass der Prüfparameter als Maß für eine zu messende Kraft verwendet, vorzugsweise in eine solche umgerechnet werden kann. Somit kann der Prüfparameter als Eingangsgröße verwendet werden, um auf den Probenkörper einzuwirken. Die zu bestimmende Widerstandskraft, welche vorzugsweise in Abhängigkeit von der Eingangsgröße, also dem Prüfparameter, ermittelt wird, ist vorzugsweise eine dem Prüfparameter entsprechende Größe, insbesondere eine Kraft und/oder ein Druck.

Die erste und/oder zweite Befestigungseinrichtung ist vorzugsweise als separates Adapterelement ausgebildet, welches an dem Kraftaufnahmeelement, insbesondere in einem der Kraftaufnahmebereiche befestigbar ist. Zudem ist die erste Befestigungseinrichtung an der insbesondere stationär angeordneten Kraftmesseinrichtung derart befestigbar, dass die erste Befestigungseinrichtung und/oder das Kraftaufnahmeelement gegenüber der Kraftmesseinrichtung verlagerbar sind. Die zweite Befestigungseinrichtung ist vorzugsweise eingerichtet, um das Kraftübertragungselement an der Befestigungseinrichtung zu befestigen. Diese Befestigung wird zumindest teilweise, vorzugsweise ausschließlich, durch den Magneten bewirkt.

Alternativ sind die erste Befestigungseinrichtung einstückig mit dem Kraftaufnahmeelement und/oder der Kraftmesseinrichtung und/oder die zweite Befestigungseinrichtung einstückig mit dem Kraftübertragungselement und/oder dem Kraftaufnahmeelement ausgebildet. Auch in diesem Fall ist vorgesehen, dass die zweite Befestigungseinrichtung einen Magneten aufweist, welcher eingerichtet ist, um das Kraftübertragungselement an dem zweiten Kraftaufnahmebereich des Kraftaufnahmeelements zu halten. Dabei kann der Magnet auf der Seite des Kraftübertragungselements, insbesondere einstückig mit diesem, oder auf der Seite des Kraftaufnahmeelements, insbesondere einstückig mit diesem, ausgebildet sein. Wichtig ist, dass er - im bestimmungsgemäß verbundenen Zustand des Kraftübertragungselements mit dem zweiten Kraftaufnahmebereich - mit einem Metall und/oder einem weiteren Magnet auf der jeweils gegenüberliegenden Seite zusammenwirkt, um das Kraftübertragungselement an dem Kraftaufnahmeelement zu halten.

Gemäß einer Weiterbildung der Erfindung ist vorgesehen, dass die zweite Befestigungseinrichtung als separat ausgebildetes, zweites, insbesondere unteres Adapterstück ausgebildet ist. Somit ist die zweite Befestigungseinrichtung individuell passend auf das Kraftübertragungselement abgestimmt. Insbesondere sind dadurch bereits bekannte Kraftmessdosen verwendbar, welche üblicherweise keinen Magneten aufweisen, indem der Magnet an der zweiten Befestigungseinrichtung, also an dem zweiten Adapterstück angeordnet ist.

Das zweite Adapterstück ist vorzugsweise in Schwerkraftrichtung unterhalb des Kraftaufnahmelements angeordnet. Alternativ ist es jedoch auch möglich, dass es oberhalb oder seitlich zu dem Kraftaufnahmeelement angeordnet ist.

Vorzugsweise ist das zweite Adapterstück an seinem - in bestimmungsgemäßer Einbaulage - dem Kraftaufnahmeelement zugewandten Ende schraubtechnisch mit dem Kraftaufnahmeelement in dem zweiten Kraftaufnahmebereich verbindbar, wobei besonders bevorzugt der zweite Kraftaufnahmebereich eine zweite Gegenanlagefläche und das zweite Adapterstück eine zweite Anlagefläche aufweist, wobei zweite Anlagefläche und die zweite Gegenanlagefläche ausgebildet sind, um zumindest bereichsweise eben aneinander zu liegen und dadurch eine insbesondere kreisringförmige Kontaktfläche zu bilden. Die zweite Anlagefläche und/oder die zweite Gegenanlagefläche sind vorzugsweise symmetrisch und senkrecht zu der Beaufschlagungsrichtung - zumindest bei Einwirkung einer Kraft - angeordnet. An seinem dem Kraftaufnahmeelement abgewandten Ende weist das Adapterstück vorzugsweise den Magneten auf, mittels welchem das Kraftübertragungselement an dem Adapterstück gehalten werden kann.

Unter einer Beaufschlagungsrichtung wird hier insbesondere eine Richtung verstanden, in welche die auf den ersten Kraftaufnahmebereich einzuwirkende Kraft, also insbesondere eine von der Kraftmesseinrichtung, ganz besonders Kraftmessturm, ausgehende Kraft, gerichtet ist. Vorzugsweise fällt diese Richtung mit einer Mittelachse der Kraftmessanordnung, insbesondere des Kraftaufnahmeelements, des zweiten Adapterstücks und/oder des Kraftübertragungselements, zusammen. Besonders bevorzugt ist die Beaufschlagungsrichtung in Schwerkraftrichtung, also senkrecht nach unten, ausgerichtet. Ferner ist die Beaufschlagungsrichtung bevorzugt senkrecht zur Stirnfläche des Kraftübertragungselements ausgerichtet.

Gemäß einer Weiterbildung der Erfindung ist vorgesehen, dass das Kraftübertragungselement mittels des Magneten gegen eine vorzugsweise ebene Stützfläche der Kraftmessanordnung gedrängt ist. Somit ist eine optimale Krafteinwirkung gewährleistet und die Genauigkeit der Kraftmessanordnung ist hoch.

Dabei wird eine Gegenstützfläche des Kraftübertragungselements von der magnetischen Haltekraft vorzugsweise in dem zweiten Kraftaufnahmebereich gegen das Kraftaufnahmeelement und/oder gegen die zweite Befestigungseinrichtung, insbesondere das zweite Adapterstück, gedrängt, insbesondere gezogen, wodurch hier vorzugsweise ein kreisringförmiger, ebener Kontakt zwischen Kraftübertragungselement und dem zweiten Adapterstück gebildet ist. Die Stützfläche ist dabei vorzugsweise ausschließlich eben und/oder an dem Kraftaufnahmeelement und/oder an dem zweiten Adapterstück ausgebildet, wobei die Stützfläche besonders bevorzugt keine Stufen oder Schrägen aufweist. Zudem ist dabei vorzugsweise lediglich eine durchgehende flächige Anlage zwischen dem Kraftübertragungselement und dem Kraftaufnahmeelement ausgebildet.

Gemäß einer Weiterbildung der Erfindung ist vorgesehen, dass der Probenkörper als ein medizinischer Hohlkörper, insbesondere ein Medikamentenbehälter, mit einem Stopfenelement ausgebildet ist und das Kraftübertragungselement eingerichtet ist, um in ein Innenvolumen des medizinischen Hohlkörpers zumindest teilweise einzudringen, und darin das Stopfenelement vorzugsweise in Beaufschlagungsrichtung zu beaufschlagen. Somit können mittels der Kraftmesseinrichtung die Haltekräfte des Stopfenelements in dem Innenvolumen des medizinischen Hohlkörpers zuverlässig geprüft werden. Speziell bei solchen medizinischen Hohlkörpern ist es wichtig, dass die Prüfung der Haltekräfte besonders genau und ohne Verformung des Stopfens erfolgt, da die Verformung zu veränderten Haltekräften in dem Hohlkörper führen würde, sodass die Kraftmessung in diesem Falle nicht mehr die tatsächlichen Haltekräfte des unverformten Stopfens ausmessen kann.

Das Kraftübertragungselement wirkt also mit seiner in Beaufschlagungsrichtung gerichteten Stirnseite auf das Stopfenelement ein, wobei die Beaufschlagungsrichtung vorzugsweise senkrecht zu der Stirnseite ausgerichtet ist.

Unter einem medizinischen Hohlkörper wird hier insbesondere eine Spritze, eine Karpule, eine Ampulle und/oder eine Phiole verstanden.

Gemäß einer Weiterbildung ist vorgesehen, dass das Kraftübertragungselement eine Längserstreckung aufweist, die - zusammen mit einer Längserstreckung des Stopfenelements - auf eine Längserstreckung des Innenvolumens abgestimmt ist oder größer ist als diese. Somit ist es möglich, dass das Kraftübertragungselement ohne weiteres vollständig das Innenvolumen des medizinischen Hohlkörpers durchdringt, sodass ein maximaler Verlagerungsweg des Stopfenelements bei der Kraftmessung geprüft werden kann.

Vorzugweise weist das Kraftübertragungselement einen stangenförmigen Fortsatz auf, welcher dieser Länge entspricht. Der stangenförmige Fortsatz, insbesondere dessen dem Stopfenelement zugewandtes Ende weist vorzugsweise die insbesondere ebene Stirnfläche auf, welche einen Durchmesser aufweist, der höchstens 1 mm, vorzugsweise höchstens 0,5 mm, vorzugsweise höchstens 0,1 mm, vorzugsweise höchstens 0,06 mm, geringer als ein Stopfendurchmesser einer - bei bestimmungsgemäßer Einbaulage - gegenüberliegenden Stopfenquerschnittsfläche des Stopfenelements. Somit ist eine besonders verformungsfreie Beaufschlagung des Stopfenelements mit dem Kraftübertragungselement möglich.

Gemäß einer Weiterbildung der Erfindung ist vorgesehen, dass das Kraftübertragungselement zumindest bereichsweise magnetisierbar ausgebildet ist und/oder einen plasmanitrierten Edelstahl aufweist, wobei das Kraftaufnahmeelement oder das zweite Adapterstück den Magneten aufweist, und/oder dass das Kraftübertragungselement den Magneten aufweist und das Kraftaufnahmeelement oder das zweite Adapterstück zumindest bereichsweise magnetisierbar ausgebildet ist und/oder einen plasmanitrierten Edelstahl aufweist. Somit kann das Kraftübertragungslement ohne Magnet ausgebildet werden, wodurch die Kraftmessanordnung ohne hohe Kosten flexibel einsetzbar ist. Insbesondere kann somit eine Vielzahl verschiedener Kraftübertragungselement mit insbesondere verschiedenen Stirnflächen an dem zweiten Adapterstück montiert werden, wobei die Kosten niedrig sind und die Genauigkeit der Kraftmessanordnung hoch ist.

Vorzugsweise ist der Magnet in einem Aufnahmebereich des unteren Adapterstücks angeordnet, welcher zur Aufnahme des Kraftübertragungselements ausgebildet ist. In diesem Fall wirken die magnetischen Kräfte sehr direkt auf das Kraftübertragungselement und die Stabilität im gehaltenen Zustand des Kraftübertragungslelements ist hoch.

Alternativ oder zusätzlich sind die erste Befestigungseinrichtung zu einer ersten Befestigungsachse und/oder die zweite Befestigungseinrichtung zu einer zweiten Befestigungsachse zumindest abschnittsweise drehsymmetrisch, insbesondere rotationssymmetrisch ausgebildet. Hierdurch werden besonders gleichmäßige Kraftübertragungen ermöglicht und eine Verformung des Stopfenelements ist weiter vermieden.

Gemäß einer Weiterbildung der Erfindung ist vorgesehen, dass die erste Befestigungseinrichtung einen Positionierbolzen aufweist, welcher vorzugsweise zumindest abschnittsweise zylindrisch und/oder zumindest annähernd spielfrei, besonders bevorzugt spielfrei, in eine insbesondere zylindrische Durchführung einführbar und - im eingeführten Zustand - mittels eines Fixierelements darin derart fixierbar ist, dass das Kraftaufnahmeelement in Richtung einer Positionierachse des Positionierzylinders, welche vorzugsweise mit der Beaufschlagungsrichtung zusammenfällt, mittels des Fixierelements festgelegt ist. Somit ist eine besonders gleichmäßige Beaufschlagung des Probenkörpers sichergestellt, wobei insbesondere Verkippungen der Kraftmessanordnung relativ zu dem Probenkörper, insbesondere zwischen dem Probenkörper und dem Kraftübertragungselement, vermieden sind. Dadurch ist die Kraftmessung sehr genau und eine Beschädigung des Probenkörpers, insbesondere des medizinischen Behälters, durch deas Kraftübertragungselement ist vermieden.

Die Positionierachse des Positionierzylinders ist vorzugsweise parallel zu der Beaufschlagungsrichtung ausgerichtet, wobei sie besonders bevorzugt mit einer Mittelachse, insbesondere Symmetrieachse des Positionierzylinders und/oder der zylindrischen Durchführung zusammenfällt. Hierdurch ist eine besonders exakte und genaue Kraftübertragung realisiert.

Gemäß einer Weiterbildung der Erfindung ist vorgesehen, dass die erste Befestigungseinrichtung als separat ausgebildetes, erstes, insbesondere oberes Adapterstück ausgebildet ist, welches mit einer ersten, insbesondere ebenen Anlagefläche - in bestimmungsgemäßer Einbaulage in der Kraftmessanordnung - in dem ersten Kraftaufnahmebereich an dem Kraftaufnahmeelement anliegt. Somit kann das Kraftaufnahmeelement besonders einfach in einem entsprechenden Halteelement, insbesondere einer Prüfvorrichtungshalterung, montiert werden, wobei eine Messung einer Kraft in Beaufschlagungsrichtung fehlerunanfällig ist.

Vorzugsweise liegt die erste Anlagefläche des ersten Adapterstücks an einer ersten Gegenanlagefläche des Kraftaufnahmeelements insbesondere flächig an. Besonders bevorzugt wird die erste Anlagefläche von einer senkrecht zur Beaufschlagungsrichtung orientierten Ringfläche an einem insbesondere unteren Ende des Positionierzylinders gebildet, wobei die erste Gegenanlagefläche in dem festgesetzten Zustand des Positionierzylinders mittels des Fixierelements gegen die erste Anlagefläche gepresst ist. Sowohl die erste Anlagefläche als auch die erste Gegenanlagefläche sind vorzugsweise senkrecht zu der Positionierachse und/oder senkrecht zur Beaufschlagungsrichtung ausgerichtet und/oder ringförmig ausgebildet. Besonders bevorzugt sind die Relativkraft, die Beaufschlagungsrichtung und/oder eine Mittelachse des oberen Adapterstücks, des unteren Adapterstücks, des Kraftaufnahmeelements, des Kraftübertragungselements und/oder des Fixierelements axial aufeinander ausgerichtet.

Gemäß einer Weiterbildung der Erfindung ist vorgesehen, dass das Kraftaufnahmeelement ein Justiermittel aufweist, wobei mittels des Justiermittels eine Kraftaufnahmeachse des Kraftaufnahmeelements, welche in einem belasteten Zustand mit einer Orientierung der Relativkraft zusammenfällt, justierbar ist. Somit können Verkippungen und schräg ausgerichtete Bauteile entlang des Beaufschlagungsweges korrigiert werden. Dadurch ist die Genauigkeit der Kraftmesseinrichtung hoch.

Dabei ist vorzugsweise die erste Gegenanlagefläche relativ zu der Kraftaufnahmeachse des Kraftaufnahmeelements, welches vorzugsweise der Mittelachse entspricht und/oder parallel zu der Beaufschlagungsrichtung ausgerichtet ist, mittels des Justiermittels verkippbar. Dadurch kann die Orientierung des Kraftaufnahmeelements relativ zu der Kraftmesseinrichtung verstellt werden, sodass auch minimale, gegebenenfalls konstruktionsbedingte Abweichungen in der Ausrichtung der Beaufschlagungsrichtung relativ zu der Mittelachse des Kraftaufnahmeelement und/oder der Relativkraft mittels des Justiermittels einfach korrigierbar sind.

Dabei wird das Justiermittel vorzugsweise durch zumindest eine, insbesondere drei Schrauben gebildet, sodass hier eine Dreipunktanlage ausgebildet ist, wobei die zumindest eine Schraube die erste Gegenanlagefläche, welche hier vorzugsweise als insbesondere obere Plattenabdeckung ausgebildet ist, gegenüber der zweiten Gegenanlagefläche verkippt. Die zweite Gegenanlagefläche ist dabei vorzugsweise auf der der ersten Gegenanlagefläche gegenüberliegenden Seite des Kraftaufnahmeelements angeordnet.

Vorzugsweise ist in dem Anlagebereich, in welchem das zweite Adapterstück an dem zweiten Kraftaufnahmebereich anliegt, die zweite Gegenanlagefläche ausgebildet, welche vorzugsweise senkrecht zur Beaufschlagungsrichtung und eben ausgebildet ist. Das Justiermittel ist vorzugsweise derart ausgebildet, dass mittels des Justiermittels die erste Gegenanlagefläche parallel zu der zweiten Gegenanlagefläche ausrichtbar ist. Hierdurch wird eine besonders geradlinige Kraftübertragung geschaffen, sodass die Genauigkeit der Kraftmesseinrichtung hoch ist.

Gemäß einer Weiterbildung der Erfindung ist vorgesehen, dass zwischen dem Kraftaufnahmeelement und dem Kraftübertragungselement zumindest eine Passscheibe derart anordenbar, insbesondere angeordnet, ist, dass eine Gesamtlänge der Kraftmessanordnung auf eine Eingriffshöhe und/oder eine Länge eines zur Aufnahme in der Kraftmesseinrichtung vorgesehenen medizinischen Hohlkörpers abstimmbar ist. Hierdurch ist die Kraftmesseinrichtung besonders flexibel einsetzbar und es können verschiedenartige medizinische Hohlkörper vermessen werden, ohne dass es einer Änderung der Kraftmesseinrichtung als Ganzes, insbesondere des Kraftübertragungselements und/oder der Adapterstücke, bedarf.

Sofern das zweite Adapterstück vorgesehen ist, ist die Passscheibe vorzugsweise zwischen dem zweiten Adapterstück und dem Kraftaufnahmeelement anordenbar, sodass ein Abstand zwischen diesen auf die Eingriffshöhe und/oder die Länge des medizinischen Hohlkörpers abstimmbar ist.

Vorzugsweise sind zumindest zwei Kraftaufnahmeelemente in der Kraftmessanordnung insbesondere parallel zueinander angeordnet, wobei ein erstes Kraftaufnahmeelement mittels der zumindest einen Passscheibe eingerichtet ist, um in einen Medikamentenbehälter mit einer ersten Länge einzudringen und darin einen Stopfen zu verlagern, und wobei ein zweites Kraftaufnahmeelement eingerichtet ist, um mittels zumindest einer weiteren oder keiner Passscheibe eingerichtet ist, um in einen Medikamentenbehälter mit einer zweiten Länge einzugreifen.

Die Aufgabe wird insbesondere auch gelöst, indem eine Kraftmessvorrichtung geschaffen wird, welche zumindest eine Kraftmessanordnung nach einem der zuvor beschriebenen Ausführungsbeispiele, eine Kraftmesseinrichtung, insbesondere Kraftmessturm, und zumindest eine, vorzugsweise drei Probenkörperaufnahmen aufweist, wobei die Kraftmessanordnung zumindest ein Kraftaufnahmeelement, vorzugsweise drei solche Kraftaufnahmeelemente aufweist, wobei das zumindest eine Kraftaufnahmeelement mittels zumindest einer ersten Befestigungseinrichtung an der Kraftmesseinrichtung befestigt ist, wobei die zumindest eine Probenkörperaufnahme jeweils zur Aufnahme eines Probenkörpers eingerichtet ist, und wobei die Kraftmesseinrichtung eingerichtet ist, um mittels eines Kraftübertragungselements der Kraftmessanordnung den jeweiligen Probenkörper mit dem Prüfparameter zu beaufschlagen und/oder eine dem Prüfparameter entgegenwirkende Kraft mittels des Kraftaufnahmeelements zu messen. Dabei ergeben sich die bereits zuvor im Zusammenhang mit der Kraftmessanordnung genannten Vorteile.

Die Aufgabe wird insbesondere auch gelöst, indem ein Verfahren zur Kraftmessung mit einer Kraftmessanordnung nach einem der zuvor beschriebenen Ausführungsbeispiele oder eine Kraftmessvorrichtung nach dem zuvor beschriebenen Ausführungsbeispiel geschaffen wird, wobei ein Prüfparameter, insbesondere eine Prüfkraft oder eine Prüfgeschwindigkeit, in das Kraftaufnahmeelement über den ersten und/oder den zweiten Kraftaufnahmebereich eingeleitet wird, wobei der Probenkörper, insbesondere der Endstopfen in dem medizinischen Hohlkörper, mit dem Prüfparameter beaufschlagt wird, und wobei eine Widerstandskraft des Probenkörpers insbesondere in Abhängigkeit von dem Prüfparameter und der in der Kraftmessanordnung, insbesondere in dem Kraftaufnahmeelement, gemessenen Relativkraft, ermittelt wird. Ein solches Verfahren ist mittels der Kraftmessanordnung nach einem der zuvor beschriebenen Ausführungsbeispiele sehr genau und unanfällig gegenüber Verkippungen.

Gemäß einer Weiterbildung der Erfindung ist vorgesehen, dass das Kraftübertragungselement in ein Innenvolumen des Probenkörpers, insbesondere in einen medizinischen Hohlkörper, zumindest teilweise eindringt, wobei vorzugsweise ein Stopfenelement des Probenkörpers beaufschlagt wird. Somit lässt sich mittels des Verfahrens die Widerstandskraft des Stopfenelements des Probenkörpers ermitteln.

Gemäß einer Weiterbildung der Erfindung ist vorgesehen, dass zur Ermittlung der Widerstandskraft eine an dem zweiten Kraftaufnahmebereich angreifende Schwerkraft, insbesondere eine Schwerkraft des Kraftübertragungselements und/oder des unteren Adapterstücks, steuerungstechnisch berücksichtigt wird, insbesondere indem die Vorrichtung tariert wird. Eine derartige Berücksichtigung der Schwerkraft ist besonders unkompliziert, flexibel einsetzbar und erfordert keine zusätzlichen baulichen Maßnahmen, insbesondere kann darauf verzichtet werden, das Kraftaufnahmeelement beziehungsweise die Kraftaufnahmebereiche gegeneinander entgegengerichtet der Schwerkraft und betragsmäßig gleich zur Schwerkraft vorzubelasten.

Die Aufgabe wird insbesondere auch gelöst, indem ein Adapterstück für eine Kraftmessanordnung nach einem der zuvor beschriebenen Ausführungsbeispiele geschaffen wird, wobei das Adapterstück als zweites Adapterstück und somit als zweite Befestigungseinrichtung für die Kraftmessanordnung eingerichtet ist und einen Magneten aufweist, welcher eingerichtet ist, um ein Kraftübertragungselement der Kraftmessanordnung an einem zweiten Kraftaufnahmebereich der Kraftmessanordnung zu halten. Hierbei ergeben sich die gleichen bereits zuvor im Zusammenhang mit dem Verfahren und der Kraftmessanordnung und der Kraftmesseinrichtung genannten Vorteile.

Dabei bildest das insbesondere zweite Adapterstück - in einem in der Kraftmessanrodnung montierten Zustand - mit dem Kraftaufnahmeelement einerseits und/oder mit dem Kraftübertragungselement andererseits jeweils ebene Anlageflächen aus, welche senkrecht zu der Beaufschlagsrichtung ausgerichtet sind. Besonders bevorzugt sind keine weiteren, insbesondere keine unebenen Anlagefläche zwischen dem Kraftaufnahmeelement und dem Kraftübertragungselement ausgebildet.

Die Beschreibungen der Kraftmessanodnung, der Kraftmessvorrichtung , des Verfahrens und des Adapterstücks sind komplementär zueinander zu verstehen. Insbesondere sind Merkmale der Kraftmessanodnung, der Kraftmessvorrichtung und/oder des Adapterstücks, die explizit oder implizit in Zusammenhang mit dem Verfahren beschrieben wurden, bevorzugt einzeln oder miteinander kombiniert Merkmale der Kraftmessanodnung, der Kraftmessvorrichtung und/oder des Adapterstücks. Bevorzugt sind die Kraftmessanodnung, die Kraftmessvorrichtung und/oder das Adapterstück ausgebildet zur Durchführung wenigstens eines der in Zusammenhang mit dem Verfahren beschriebenen Verfahrensschritte. Verfahrensschritte, die explizit oder implizit in Zusammenhang mit der Kraftmessanodnung, der Kraftmessvorrichtung und/oder dem Adapterstück beschrieben wurden, sind bevorzugt einzeln oder in Kombination miteinander Schritte einer bevorzugten Ausführungsform des Verfahrens. Insbesondere ist im Rahmen des Verfahrens bevorzugt wenigstens ein Schritt vorgesehen, der sich aus wenigstens einem Merkmal der Kraftmessanodnung, der Kraftmessvorrichtung und/oder des Adapterstücks ergibt.

Im Folgenden wird die Erfindung anhand der Zeichnung näher erläutert. Dabei zeigen:
- Figur 1: eine Kraftmessvorrichtung mit einer Kraftmessanordnung gemäß einem ersten Ausführungsbeispiel,
- Figur 2: ein unteres Adapterstück mit einem magnetisch gehaltenen Kraftübertragungselement einer Kraftmessanordnung gemäß einem zweiten Ausführungsbeispiel,
- Figur 3: eine Kraftmessanordnung gemäß dem zweiten Ausführungsbeispiel ohne Kraftübertragungselement, und
- Figur 4: die Kraftmessanordnung gemäß dem zweiten Ausführungsbeispiel ohne Kraftübertragungselement in einer seitlichen Teilschnittdarstellung.

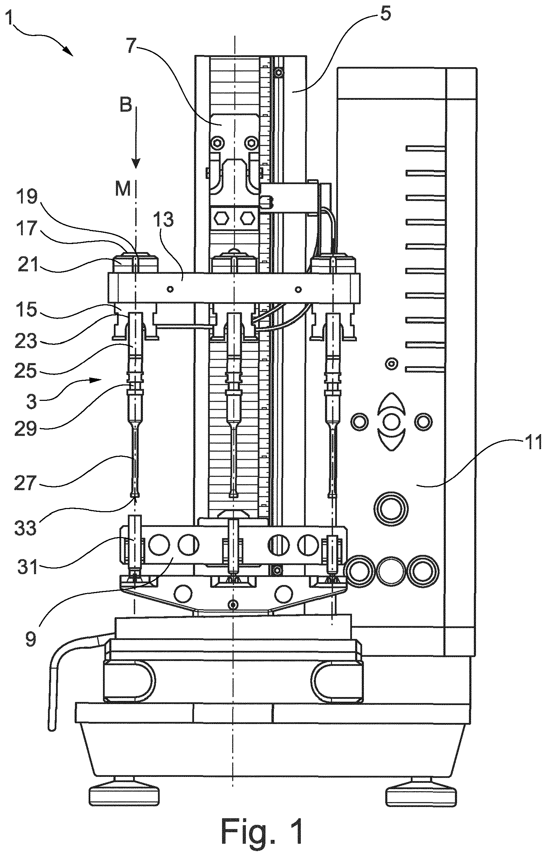

Figur 1 zeigt eine Kraftmessvorrichtung 1 in einer Frontalansicht. Die Kraftmessvorrichtung 1 umfasst eine Kraftmessanordnung 3, einen Kraftmessturm 5, ein Schlittenteil 7, eine Probenkörperhalterung 9, ein Steuergerät 11 sowie eine weitere Halterung 13, mittels welcher die Kraftmessanordnung 3 an dem Schlittenteil 7 des Kraftmessturms 5 gehalten ist.

Die Kraftmessanordnung 3 ist vorzugsweise zum Beaufschlagen eines insbesondere in der Probenkörperhaltung 9 gehaltenen Probenkörpers mit einem Prüfparameter und/oder zum Messen einer von dem Probenkörper entgegengebrachten Widerstandskraft eingerichtet. Dabei weist die Kraftmessanordnung 3 zumindest ein Kraftaufnahmeelement 25, eine erste Befestigungseinrichtung und ein Kraftübertragungselement 27 auf, wobei das Kraftaufnahmeelement 25 mittels der ersten Befestigungseinrichtung an einer Kraftmesseinrichtung, hier insbesondere mittels des Schlittenteils 7 an dem Kraftmessturm 5, verlagerbar befestigbar ist. Dabei ist das Kraftaufnahmeelement eingerichtet, um eine zwischen zwei Kraftaufnahmebereichen, nämlich einem ersten Kraftaufnahmebereich und einem zweiten Kraftaufnahmebereich 51, wirkende Relativkraft zu messen. Zudem ist die erste Befestigungseinrichtung über den ersten Kraftaufnahmebereich mit dem Kraftaufnahmeelement 25 und der zweite Kraftaufnahmebereich 51 mit dem Kraftübertragungselement 27 mittels einer zweiten Befestigungseinrichtung, welches hier insbesondere als ein zweites, unteres Adapterstück 29 ausgebildet ist, kraftübertragungstechnisch verbindbar. Das Kraftübertragungselement 27 ist hier eingerichtet, um den Probenkörper mit dem Prüfparameter zu beaufschlagen. Dabei weist die zweite Befestigungseinrichtung einen Magneten 37 auf, welcher eingerichtet ist, um das Kraftübertragungselement 27 - zumindest in einem kraftübertragungstechnisch mit dem zweiten Kraftaufnahmebereich 51 verbundenen Zustand - zu halten.

Die Kraftmessanordnung 3 ist hier mittels der ersten Befestigungseinrichtung, welche hier als ein erstes, insbesondere oberes Adapterstück 15 ausgebildet ist, an der weiteren Halterung 13 befestigt, indem ein hier nicht sichtbarer zylindrischer Positionierzylinder durch eine entsprechend zylindrisch ausgebildete Durchführung in der weiteren Halterung 13 hindurchgeführt und an dessen oberen Ende 17 ein Gewinde 19 aufweist, mittels dessen es schraubtechnisch, insbesondere mittels einer Nutmutter 21, an der Halterung 13 gehalten wird. Mittels der Nutmutter 21 ist es derart an der weiteren Halterung 13 und damit an dem Kraftmessturm 5 beziehungsweise dem Schlittenteil 7 festgesetzt, dass das obere Adapterstück 15 in vertikaler und in horizontaler Richtung starr mit dem Schlittenteil 7 verbunden ist. An einem dem oberen Ende 17 gegenüberliegenden unteren Ende 23 des oberen Adapterstücks 15 ist das obere Adapterstück 15 mit dem ersten Kraftaufnahmebereich des Kraftaufnahmeelements 25 kraftübertragungstechnisch fest verbunden. Das Kraftaufnahmeelement 25 ist hier insbesondere als rechteckige Kraftmessdose ausgebildet. Diese ist eingerichtet, um die zwischen dem ersten Kraftaufnahmebereich und dem diesem - hier in vertikaler Richtung gesehen - gegenüberliegenden, zweiten Kraftaufnahmebereich 51 wirkende Relativkraft zu messen.

Die Relativkraft wird bewirkt, indem die Kraftmessanordnung 3 mittels des Schlittenteils 7 an dem Kraftmessturm 5 nach unten verlagert wird, bis das Kraftübertragungselement 27, welches mittels des zweiten, insbesondere unteren Adapterstücks 29 an dem zweiten Kraftaufnahmebereich kraftübertragungstechnisch befestigt ist, auf den einen Widerstand bildenden Probenkörper, hier insbesondere ein nicht dargestelltes Stopfenelement eines medizinischen Behälters 31 stößt. Das untere Adapterstück 29 dient hier somit als insbesondere zweite Befestigungseinrichtung, welche das zur Einwirkung auf den Probenkörper ausgebildete Kraftübertragungselement 27 mit dem zweiten Kraftaufnahmebereich des Kraftaufnahmeelements 25 kraftübertragungstechnisch verbindet, sodass die Relativkraft durch das Kraftaufnahmeelement 25 gemessen werden kann.

Das Kraftübertragungselement 27 ist hier insbesondere als Stößel ausgebildet, welcher an seinem unteren Ende eine ebene Beaufschlagungsfläche 33 aufweist, welche sich senkrecht zur Beaufschlagungsrichtung B erstreckt. Die Beaufschlgungsrichtung fällt hier mit einer zentralen, gemeinsamen Mittelachse M zusammen, welche sich mittig durch das Kraftübertragungselement 27, das untere Adapterstück 29, das Kraftaufnahmeelement 25 und das obere Adapterstück 15 erstreckt. Dadurch werden besonders gleichmäßige Beaufschlagungskräfte zwischen dem Kraftübertragungselement 27 und dem Stopfenelement des medizinischen Behälters 31 bewirkt, sodass die Messgenauigkeit sehr hoch ist. Zudem ist die Kraftmessanordnung 3 derart ausgerichtet, dass die Mittelachse M zusätzlich mit einer Mittelachse des Stopfenelements und/oder des medizinischen Behälters 31 zusammenfällt, wodurch die Messgenauigkeit ebenfalls hoch ist.

Um eine Verformung und damit eine ungleichmäßige und verfälschte Widerstandskraft des Stopfenelements zu vermeiden, ist die Beaufschlagungsfläche 33 nahezu genauso groß wie die dieser gegenüberliegende Fläche des Stopfenelements in dem medizinischen Behälter 31, welche vorzugsweise einer Querschnittsinnenfläche des medizinischen Behälters 31 entspricht. Dabei ist die Beaufschlagungsfläche 33 vorzugsweise nicht mehr als 1 mm, vorzugsweise nicht mehr als 0,5 mm kleiner, vorzugsweise nicht mehr als 0,1 mm kleiner, vorzugsweise nicht mehr als 0,06 mm kleiner als die gegenüberliegende Fläche des Stopfenelements und/oder die Querschnittsinnenfläche.

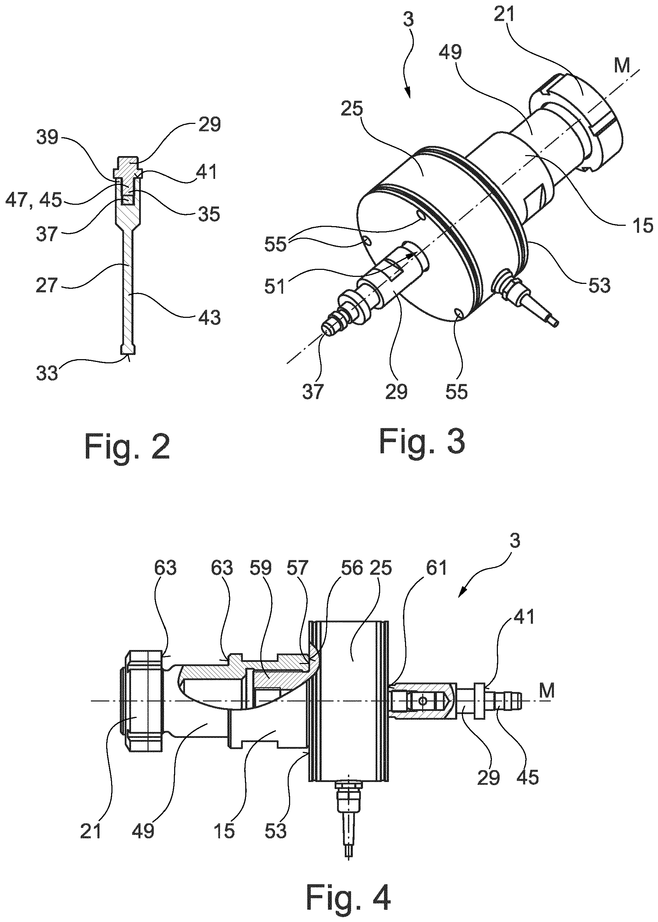

In Figur 2 ist das untere Adapterstück 29 und das daran befestigte Kraftübertragungselement 27 in einer Längsschnittdarstellung gezeigt. Um das Kraftübertragungselement 27 an dem unteren Adapterstück 29 und damit an dem hier nicht dargestellten Kraftaufnahmeelement zu halten, weist das untere Adapterstück 29 an seinem unteren, dem Kraftübertragungselement 27 zugewandten Ende 35 einen Magneten 37 auf. Der Magnet 37 zieht das Kraftübertragungselement 27, welches vorzugsweise einen plasmanitrierten Edelstahl in dem in axialer Richtung zum Magneten benachbarten Bereich aufweist oder daraus besteht, derart an, das das Kraftübertragungselement 27 an dessen oberen Ende 39 zusammen mit dem unteren Adapterstück 29 eine kreisringförmige, ebene Kontaktfläche 41 ausbildet. Das untere Adapterstück 29 weist hier also eine eben ausgebildete Stützfläche auf, an welcher sich das Kraftübertragungselement 27 mit einer entsprechend eben ausgebildeten Gegenstützfläche abstützt, wodurch die kreisringförmige, ebene Kontaktfläche 41 gebildet wird, sodass die Genauigkeit der Kraftmessanordnung 3 bei der Kraftmessung hoch ist.

Zudem ist in Figur 2 gut zu erkennen, dass das Kraftübertragungselement 27 in einem mittleren Bereich 43, also zwischen der Beaufschlagungsfläche 33 und der kreisringförmigen Kontaktfläche 41 schmaler ausgebildet ist, als an dem die Beaufschlagungsfläche 33 aufweisenden Ende. Dadurch dass in diesem Bereich das Kraftübertragungselement radial zurückspringt, ist die Gefahr des Verkantens und/oder einer Beschädigung des medizinischen Behälters 31 beim Einführen des Kraftübertragungselements 27 in den medizinischen Behälter 31 verringert. Vorzugsweise reduziert sich ein Radius des Kraftübertragungselements 27 von der Beaufschlagungsfläche 33 aus zu der kreisringförmigen Kontaktfläche 41 gesehen unmittelbar hinter der Beaufschlagungsfläche 33, sodass die Beaufschlagungsfläche 33 von einem konusförmigen Abschnitt des Kraftübertragungselements 27 geschaffen ist.

Durch die kreisringförmige Kontaktfläche 41 ist eine kippsichere Anlage gebildet, sodass Messfehler bei der Kraftmessung vermieden werden.

Um das Kraftübertragungselement 27 gegenüber dem Adapterstück 29 in zur Mittelachse M gesehener radialer Richtung zu fixieren, weist das Adapterstück 29 einen stiftförmigen Fortsatz 45 auf, welcher vorzugsweise zylindrisch ausgebildet ist und den Magneten aufweist. Dieser Fortsatz 45 ist ausgebildet, um in eine entsprechend gegensätzlich geformten Ausnehmung 47 des Kraftübertragungselements 27 einzugreifen. Vorzugsweise ist hier ein Spiel zwischen dem Fortsatz 45 und der Ausnehmung 47 auf ein Minimum, insbesondere auf kleiner als 0,1 mm, vorzugsweise kleiner als 0,05 mm, begrenzt, sodass Verkippungen und dadurch bedingte Ausweichbewegungen des Kraftübertragungselements 27 beim Beaufschlagen mit der Prüfkraft vermieden sind.

Figur 3 zeigt die Kraftmessanordnung 3 ohne Kraftübertragungselement 27 in einer perspektivischen Darstellung, wobei die Kraftmessanordnung 3 nicht an dem Kraftmessturm 5 befestigt ist.

Auch die Kraftmessanordnung 3 gemäß dem zweiten Ausführungsbeispiel, welches in Figur 3 dargestellt ist, weist neben dem zentralen Kraftaufnahmeelement 25 ein oberes Adapterstück 15 sowie ein unteres Adapterstück 29 auf. Das obere Adapterstück 15 dient auch hier als erste Befestigungseinrichtung, um den ersten Kraftaufnahmebereich des Kraftaufnahmeelements 25, welcher in Figur 3 auf der dem Betrachter abgewandten Seite des Kraftaufnahmeelements 25 angeordnet ist, mit der Kraftmesseinrichtung kraftübertragungstechnisch zu verbinden. Hierzu weist das obere Adapterstück15 einen Positionierzylinder 49 auf, welcher durch eine Durchführung zur Fixierung hindurchgeführt und schraubtechnisch insbesondere mittels der Nutmutter 21 an der Halterung 13 fixiert werden kann. Diesbezüglich entspricht die Kraftmessanordnung 3 gemäß dem zweiten Ausführungsbeispiel der Kraftmessanordnung 3 gemäß dem ersten Ausführungsbeispiel.

Das untere Adapterstück 29 dient hier als zweite Befestigungseinrichtung, um den zweiten Kraftaufnahmebereich 51 mit dem in Figur 3 nicht montierten Kraftübertragungselement 27 kraftübertragungstechnisch zu verbinden. Hierzu liegt das untere Adapterstück 29 derart an dem Kraftaufnahmeelement 25 an, das zwischen Kraftaufnahmeelement 25 und dem unteren Adapterstück 29 eine ebene Kontaktfläche, welche sich senkrecht zur Mittelachse erstreckt, ausgebildet ist. An dem dem Betrachter zugewandten Ende des unteren Adapterstücks 29 ist in Figur 3 zudem der Magnet 37 erkennbar, welcher eingerichtet ist, um zusammen mit dem zylindrischen Fortsatz 45 des unteren Adapterstücks 29 das Kraftübertagungselement 27 zu halten.

Um das obere Adapterstück 15 axial auf das untere Adapterstück 29 auszurichten, weist die Kraftmessanordnung ein Justiermittel auf, welches zumindest eine Justierschraube umfasst. Die zumindest eine Justierschraube ist in dem in Figur 3 dargestellten Ausführungsbeispiel auf der dem Betrachter abgewandten Seite, also dem oberen Adapterstück 15 zugewandten Seite des Kraftaufnahmeelements 25 angeordnet. Vorzugsweise sind hier drei Justierschrauben angeordnet, welche in Umfangsrichtung in zueinander gleichen Abständen entlang einer Umfangslinie der oberen Abdeckplatte 53, analog zu der Anordnung der drei sichtbaren Schrauben 55, angeordnet sind. Mittels dieser zumindest einen Justierschraube lässt sich eine Neigung der oberen Abdeckplatte 53, insbesondere des ersten Kraftaufnahmebereichs, gegenüber der Mittelachse M und damit gegenüber dem zweiten Kraftaufnahmebereich sowie dem unteren Adapterstück 29 und im montierten Zustand dem Kraftübertragungselement 27 justieren. Das obere Adapterstück 15 liegt auf der dem Betrachter abgewandten Seite eben an der oberen Abdeckplatte 53 an und bildet dort eine weitere kreisringförmige Kontaktfläche aus, welche in der Teilschnittdarstellung in Figur 4 erkennbar ist und durch eine erste Anlagefläche 56 des oberen Adapterstücks 15 und eine erste Gegenanlagefläche 57 des Kraftaufnahmeelements 25 gebildet wird.

Das obere Adapterstück 15 ist - wie in Figur 4 erkennbar - an einem zylindrisch ausgebildeten Fortsatz 59 des Kraftaufnahmeelements 25 befestigt, vorzugsweise angeschraubt. Somit wird das obere Adapterstück 15 fest an dem Kraftaufnahmeelement 25 gehalten, wobei mittels der weiteren kreisringförmigen Kontaktfläche eine hohe Genauigkeit der Kraftmessanordnung sichergestellt ist, indem die axiale Ausrichtung des oberen Adapterstücks 15 auf das untere Adapterstück 29 störungsunanfällig ist.

Besonders bevorzugt sind sämtliche Kontakt-, Anlage- und/oder Gegenanlageflächen entlang der Kraftwirkungskette von dem oberen Adapterstück über das Kraftaufnahmeelement 25 über das untere Adapterstück 29, das Kraftüberragungselement 27 bis auf den Probenkörper, insbesondere das Stopfenelement des medizinischen Behälters 31 eben ausgebildet und erstrecken sich senkrecht zur Mittelachse M. Insbesondere die kreisringförmige Kontaktfläche 41 zwischen dem unteren Adapterstück 29 und dem Kraftübertragungselement 27, die Beaufschlagungsfläche 33 des Kraftübertragungselements 27, die erste Gegenanlagefläche 57 des Kraftaufnahmeelements 25, eine zweite Gegenanlagefläche 61 des Kraftaufnahmeelements 25 in dem zweiten Kraftaufnahmebereich 51 sowie zwei weitere Anlageflächen 63 zwischen dem oberen Adapterstück 15 beziehungsweise der Nutmutter 21 einerseits und andererseits der weiteren Halterung 13 sind kreisringförmig, symmetrisch zur Mittelachse M, parallel zueinander und/oder eben ausgebildet, wobei sich die weiteren Anlageflächen 63 vorzugsweise jeweils senkrecht zur Mittelachse M erstrecken. Neben diesen genannten Anlageflächen sind vorzugsweise keine weiteren Anlageflächen in Richtung der Mittelachse ausgebildet. Somit ist eine besonders fehlerunanfällige Kraftmessanordnung 3 geschaffen, mittels welcher einwirkende Kräfte auf einen Probenkörper und die davon ausgehenden Widerstandkräfte sehr genau vermessen werden können.

Zudem sind zwischen dem Kraftaufnahmeelement 25, insbesondere zwischen dem zweiten Kraftaufnahmebereich 51 und dem Kraftübertragungselement 27 und/oder dem Probenkörper - bei bestimmungsgemäßer Einbaulage in der Kraftmessvorrichtung 1 - keine Gewinde zur schraubtechnischen Befestigung der Elemente aneinander und keine - in radialer Richtung zur Mittelachse M - runden Kontaktflächen ausgebildet. Dadurch wird eine besonders genaue Kraftmessung bewirkt und das Montieren des Kraftübertragungselements 27 ist schnell und einfach durchführbar.

## Patentansprüche

1. Kraftmessanordnung (3) insbesondere zum Beaufschlagen eines Probenkörpers mit einem Prüfparameter und/oder zum Messen einer von dem Probenkörper entgegengebrachten Widerstandskraft, mit zumindest einem Kraftaufnahmeelement (25), einer ersten Befestigungseinrichtung und einem Kraftübertragungselement (27), wobei das Kraftaufnahmeelement (25) mittels der ersten Befestigungseinrichtung an einer Kraftmesseinrichtung verlagerbar befestigbar ist, wobei das Kraftaufnahmeelement (25) eingerichtet ist, um eine zwischen zwei Kraftaufnahmebereichen, nämlich einem ersten Kraftaufnahmebereich und einem zweiten Kraftaufnahmebereich (51), wirkende Relativkraft zu messen, wobei die erste Befestigungseinrichtung über den ersten Kraftaufnahmebereich mit dem Kraftaufnahmeelement (25) kraftübertragungstechnisch verbindbar ist, wobei der zweite Kraftaufnahmebereich (51) mit dem Kraftübertragungselement (27) mittels einer zweiten Befestigungseinrichtung kraftübertragungstechnisch verbindbar ist, wobei das Kraftübertragungselement (27) eingerichtet ist, um einen Probenkörper mit einem Prüfparameter zu beaufschlagen, **dadurch gekennzeichnet, dass** die zweite Befestigungseinrichtung einen Magneten (37) aufweist, welcher eingerichtet ist, um das Kraftübertragungselement (27) - zumindest in einem kraftübertragungstechnisch mit dem zweiten Kraftaufnahmebereich (51) verbundenen Zustand - zu halten.

2. Kraftmessanordnung nach Anspruch 1, **dadurch gekennzeichnet, dass** die zweite Befestigungseinrichtung als separat ausgebildetes, zweites Adapterstück (29) ausgebildet ist.

3. Kraftmessanordnung nach einem der vorhergehenden Ansprüche, **dadurch gekennzeichnet, dass** das Kraftübertragungselement (27) mittels des Magneten (37) gegen eine Stützfläche der Kraftmessanordnung (3) gedrängt ist.

4. Kraftmessanordnung nach einem der vorhergehenden Ansprüche, **dadurch gekennzeichnet, dass** der Probenkörper als ein medizinischer Hohlkörper mit einem Stopfenelement ausgebildet ist und das Kraftübertragungselement (27) eingerichtet ist, um in ein Innenvolumen des medizinischen Hohlkörpers zumindest teilweise einzudringen, und darin das Stopfenelement vorzugsweise in Beaufschlagungsrichtung (B) zu beaufschlagen.

5. Kraftmessanordnung nach einem der vorhergehenden Ansprüche, **dadurch gekennzeichnet, dass** das Kraftübertragungselement eine Längserstreckung aufweist, die - zusammen mit einer Längserstreckung des Stopfenelements - auf eine Längserstreckung des Innenvolumens abgestimmt ist oder größer ist als diese.

6. Kraftmessanordnung nach einem der vorhergehenden Ansprüche, **dadurch gekennzeichnet, dass** das Kraftübertragungselement (27) zumindest bereichsweise magnetisierbar ausgebildet ist und/oder einen plasmanitrierten Edelstahl aufweist, wobei das Kraftaufnahmeelement (25) oder das zweite Adapterstück (29) den Magneten aufweist, und/oder dass das Kraftübertragungselement den Magneten aufweist und das Kraftaufnahmeelement oder das zweite Adapterstück zumindest bereichsweise magnetisierbar ausgebildet ist und/oder einen plasmanitrierten Edelstahl aufweist.

7. Kraftmessanordnung nach einem der vorhergehenden Ansprüche, **dadurch gekennzeichnet, dass** die erste Befestigungseinrichtung einen Positionierbolzen (49) aufweist, welcher in eine Durchführung einführbar und im eingeführten Zustand mittels eines Fixierelements, insbesondere einer Nutmutter (21), darin derart fixierbar ist, dass das Kraftaufnahmeelement (25) in Richtung einer Positionierachse des Positionierzylinders (49) mittels des Fixierelements festgesetzt ist.

8. Kraftmessanordnung nach einem der vorhergehenden Ansprüche, **dadurch gekennzeichnet, dass** die erste Befestigungseinrichtung als separat ausgebildetes, erstes Adapterstück (15) ausgebildet ist ist, welches mit einer ersten Anlagefläche - in bestimmungsgemäßer Einbaulage in der Kraftmessanordnung (3) - in dem ersten Kraftaufnahmebereich an dem Kraftaufnahmeelement (25) anliegt.

9. Kraftmessanordnung nach einem der vorhergehenden Ansprüche, **dadurch gekennzeichnet, dass** das Kraftaufnahmeelement (25) ein Justiermittel aufweist, wobei mittels des Justiermittels eine Kraftaufnahmeachse des Kraftaufnahmeelements (25), welche in einem belasteten Zustand mit einer Orientierung der Relativkraft zusammenfällt, justierbar ist.

10. Kraftmessanordnung nach einem der vorhergehenden Ansprüche, **dadurch gekennzeichnet, dass** zwischen dem Kraftaufnahmeelement (25) und dem Kraftübertragungselement (27) zumindest eine Passscheibe derart anordenbar ist, dass eine Gesamtlänge der Kraftmessanordnung (3) auf eine Eingriffshöhe und/oder eine Länge eines zur Aufnahme in der Kraftmesseinrichtung vorgesehenen medizinischen Hohlkörpers abstimmbar ist.

11. Kraftmessvorrichtung (1) **gekennzeichnet durch** zumindest eine Kraftmessanordnung (3) nach einem der Ansprüche 1 bis 10, eine Kraftmesseinrichtung, insbesondere Kraftmessturm, und zumindest eine Probenkörperaufnahme aufweist, wobei die Kraftmessanordnung (3) zumindest ein Kraftaufnahmeelement (25) aufweist, wobei das zumindest eine Kraftaufnahmeelement (25) mittels zumindest einer ersten Befestigungseinrichtung an der Kraftmesseinrichtung befestigt ist, wobei die zumindest eine Probenkörperaufnahme (9) jeweils zur Aufnahme eines Probenkörpers eingerichtet ist, und wobei die Kraftmessvorrichtung (1) eingerichtet ist, um mittels eines Kraftübertragungselements (27) der Kraftmessanordnung (3) den jeweiligen Probenkörper mit dem Prüfparameter zu beaufschlagen und/oder eine dem Prüfparameter entgegenwirkende Kraft mittels des Kraftaufnahmeelements (25) zu messen.

12. Verfahren zur Messung einer Kraft mit einer Kraftmessanordnung (3) nach einem der Ansprüche 1 bis 10 oder einer Kraftmessvorrichtung nach Anspruch 11, mit folgenden Schritten:
- Einleiten eines Prüfparameters in das Kraftaufnahmeelement (25) über den ersten und/oder den zweiten Kraftaufnahmebereich (51),
- Beaufschlagen des Probenkörpers mit dem Prüfparameter, und
- Ermitteln einer Widerstandskraft des Probenkörpers.

13. Verfahren nach Anspruch 12, **dadurch gekennzeichnet, dass** das Kraftübertragungselement (27) in ein Innenvolumen des Probenkörpers zumindest teilweise eindringt, wobei vorzugsweise ein Stopfenelement des Probenkörpers beaufschlagt wird.

14. Verfahren nach Anspruch 12 oder 13, **dadurch gekennzeichnet, dass** zur Ermittlung der Widerstandskraft eine an dem zweiten Kraftaufnahmebereich (51) angreifende Schwerkraft steuerungstechnisch berücksichtigt wird.

15. Adapterstück für eine Kraftmessanordnung gemäß einem der Ansprüche 1 bis 10 oder einer Kraftmessvorrichtung (1) nach Anspruch 11, **dadurch gekennzeichnet, dass** das Adapterstück als zweites Adapterstück und zweite Befestigungseinrichtung für die Kraftmessanordnung (3) eingerichtet ist und einen Magneten aufweist, welcher eingerichtet ist, um ein Kraftübertragungselement (27) der Kraftmessanordnung (3) an einem zweiten Kraftaufnahmebereich der Kraftmessanordnung (3) zu halten.

## Claims

1. Force measuring assembly (3), in particular for applying a test parameter to a specimen body and/or for measuring a resistance force applied by the specimen body, having at least one force reception element (25), a first fastening device and a force transmission element (27), wherein the force reception element (25) can be displaceably fastened to a force measuring device by means of the first fastening device, wherein the force reception element (25) is set up to measure a relative force acting between two force reception regions, namely a first force reception region and a second force reception region (51) wherein the first fastening device is force transmissively connectable to the force reception element (25) via the first force reception region, wherein the second force reception region (51) is force transmissively connectable to the force transmission element (27) via a second fastening device, wherein the force transmission element (27) is arranged to apply a test parameter to a specimen body, **characterized in that** the second fastening device comprises a magnet (37) which is adapted to hold the force transmission element (27) - at least in a state force transmissively connected to the second force reception region (51).

2. Force measuring assembly according to claim 1, **characterized in that** the second fastening device is formed as a separately formed second adapter piece (29).

3. Force measuring assembly according to one of the preceding claims, **characterized in that** the force transmission element (27) is urged against a supporting surface of the force measuring assembly (3) by means of the magnet (37).

4. Force measuring assembly according to one of the preceding claims, **characterized in that** the specimen body is formed as a medical hollow body with a plug element and the force transmission element (27) is arranged to penetrate at least partially into an inner volume of the medical hollow body and to act therein on the plug element preferably in the application direction (B).

5. Force measuring assembly according to one of the preceding claims, **characterized in that** the force transmission element has a longitudinal extension which - together with a longitudinal extension of the plug element - is matched to or greater than a longitudinal extension of the inner volume.

6. Force measuring assembly according to one of the preceding claims, **characterized in that** the force transmission element (27) is formed to be magnetizable at least in regions and/or comprises a plasma-nitrided stainless steel, the force reception element (25) or the second adapter piece (29) comprising the magnet, and/or **in that** the force transmission element comprises the magnet and the force reception element or the second adapter piece is formed to be magnetizable at least in regions and/or comprises a plasma-nitrided stainless steel.

7. Force measuring assembly according to one of the preceding claims, **characterized in that** the first fastening device has a positioning bolt (49) which can be inserted into a feed through and, in the inserted state, can be fixed therein by means of a fixing element, in particular a groove nut (21), in such a way that the force reception element (25) is fixed in the direction of a positioning axis of the positioning cylinder (49) by means of the fixing element.

8. Force measuring assembly according to one of the preceding claims, **characterized in that** the first fastening device is formed as a separately formed, first adapter piece (15), which rests with a first contact surface - in the intended installation position in the force measuring assembly (3) - in the first force reception region against the force reception element (25).

9. Force measuring assembly according to one of the preceding claims, **characterized in that** the force reception element (25) has an adjusting device, wherein a force reception axis of the force reception element (25), which in a loaded state coincides with an orientation of the relative force, can be adjusted by means of the adjusting device.

10. Force measuring assembly according to one of the preceding claims, **characterized in that** at least one shim can be arranged between the force reception element (25) and the force transmission element (27) in such a way that an overall length of the force measuring assembly (3) can be matched to an engagement height and/or a length of a medical hollow body provided for accommodation in the force measuring device.

11. Force measuring apparatus (1) **characterized by** at least one force measuring assembly (3) according to one of the claims 1 to 10, comprising a force measuring device, in particular a force measuring tower, and at least one specimen body holder, wherein the force measuring assembly (3) comprises at least one force reception element (25), wherein the at least one force reception element (25) is fastened to the force measuring device by means of at least one first fastening device, wherein the at least one specimen body holder (9) is in each case set up to hold a specimen body, and wherein the force measuring apparatus (1) is set up to apply the test parameter to the respective specimen body by means of a force transmission element (27) of the force measuring assembly (3) and/or to measure a force counteracting the test parameter by means of the force reception element (25).

12. Method for measuring a force with a force measuring assembly (3) according to one of the claims 1 to 10 or a force measuring apparatus according to claim 11, comprising the following steps:
- Introducing a test parameter into the force reception element (25) via the first and/or the second force reception region (51),
- applying the test parameter to the specimen body, and
- determining a resistance force of the specimen body.

13. Method according to claim 12, **characterized in that** the force transmission element (27) penetrates at least partially into an inner volume of the specimen body, preferably acting on a plug element of the specimen body.

14. Method according to claim 12 or 13, **characterized in that** a gravity acting on the second force reception region (51) is taken into account in terms of controlling for determining the resistance force.

15. Adapter piece for a force measuring assembly according to one of the claims 1 to 10 or a force measuring apparatus (1) according to claim 11, **characterized in that** the adapter piece is set up as a second adapter piece and second fastening device for the force measuring assembly (3) and has a magnet which is set up to hold a force transmission element (27) of the force measuring assembly (3) at a second force reception region of the force measuring assembly (3).

## Revendications

1. Agencement de mesure de force (3), en particulier pour appliquer un paramètre d'essai à un échantillon et/ou pour mesurer une force de résistance opposée par l'échantillon, avec au moins un élément d'absorption de force (25), un premier dispositif de fixation et un élément de transmission de force (27), l'élément d'absorption de force (25) pouvant être fixé de manière déplaçable à un dispositif de mesure de force au moyen du premier dispositif de fixation, l'élément d'absorption de force (25) étant conçu pour mesurer une force relative agissant entre deux zones d'absorption de force, à savoir une première zone d'absorption de force et une deuxième zone d'absorption de force (51), le premier dispositif de fixation pouvant être relié par transmission de force à l'élément d'absorption de force (25) par l'intermédiaire de la première zone de réception de force, la deuxième zone d'absorption de force (51) pouvant être reliée par transmission de force à l'élément de transmission de force (27) au moyen d'un deuxième dispositif de fixation, l'élément de transmission de force (27) étant conçu, pour appliquer un paramètre d'essai à un échantillon, **caractérisé en ce que** le deuxième dispositif de fixation présente un aimant (37) qui est conçu pour maintenir l'élément de transmission de force (27) - au moins dans un état relié à la deuxième zone d'absorption de force (51) par transmission de force.

2. Agencement de mesure de force selon la revendication 1, **caractérisé en ce que** le deuxième dispositif de fixation est réalisé comme deuxième pièce d'adaptation (29) réalisé séparément.

3. Agencement de mesure de force selon l'une des revendications précédentes, **caractérisé en ce que** l'élément de transmission de force (27) est poussé contre une surface d'appui de l'agencement de mesure de force (3) au moyen de l'aimant (37).

4. Agencement de mesure de force selon l'une des revendications précédentes, **caractérisé en ce que** l'échantillon est conçu comme corps médical creux avec un élément formant bouchon et l'élément de transmission de force (27) est conçu pour pénétrer au moins partiellement dans un volume intérieur du corps médical creux et pour y appliquer l'élément formant bouchon, de préférence dans la direction d'application (B).

5. Agencement de mesure de force selon l'une des revendications précédentes, **caractérisé en ce que** l'élément de transmission de force présente une extension longitudinale qui - avec une extension longitudinale de l'élément formant bouchon - est adaptée à une extension longitudinale du volume intérieur ou est supérieure à celle-ci.

6. Agencement de mesure de force selon l'une des revendications précédentes, **caractérisé en ce que** l'élément de transmission de force (27) est réalisé de manière à pouvoir être magnétisé au moins par zones et/ou présente un acier inoxydable nitruré au plasma, l'élément de d'absorption de force (25) ou le deuxième pièce d'adaptation (29) présentant l'aimant, et/ou **en ce que** l'élément de transmission de force présente l'aimant et l'élément d'absorption de force ou le deuxième pièce d'adaptation est réalisé de manière à pouvoir être magnétisé au moins par zones et/ou présente un acier inoxydable nitruré au plasma.

7. Agencement de mesure de force selon l'une des revendications précédentes, **caractérisé en ce que** le premier dispositif de fixation présente un boulon de positionnement (49) qui peut être introduit dans un passage et qui, à l'état introduit, peut y être fixé au moyen d'un élément de fixation, en particulier d'un écrou à encoches (21), de telle sorte que l'élément de d'absorption de force (25) est fixé dans la direction d'un axe de positionnement du cylindre de positionnement (49) au moyen de l'élément de fixation.

8. Agencement de mesure de force selon l'une des revendications précédentes, **caractérisé en ce que** le premier dispositif de fixation est réalisé sous la forme d'une première pièce d'adaptation (15) réalisé séparément, qui est en appui par une première surface de contact - dans la position de montage prévue dans l'agencement de mesure de force (3) - sur l'élément d'absorption de force (25) dans la première zone d'absorption de force.

9. Agencement de mesure de force selon l'une des revendications précédentes, **caractérisé en ce que** l'élément d'absorption de force (25) présente un moyen d'ajustage, un axe d'absorption de force de l'élément d'absorption de force (25), qui coïncide avec une orientation de la force relative dans un état chargé, pouvant être ajusté au moyen du moyen d'ajustage.

10. Agencement de mesure de force selon l'une des revendications précédentes, **caractérisé en ce qu'**au moins une rondelle d'ajustage peut être disposée entre l'élément d'absorption de force (25) et l'élément de transmission de force (27) de telle sorte qu'une longueur totale de l'agencement de mesure de force (3) puisse être adaptée à une hauteur d'engagement et/ou à une longueur d'un corps médical creux prévu pour être reçu dans le dispositif de mesure de force.

11. Appareil de mesure de force (1) **caractérisé par** au moins un agencement de mesure de force (3) selon l'une des revendications 1 à 10, comprenant un dispositif de mesure de force, en particulier une tour de mesure de force, et au moins un logement d'échantillon, l'agencement de mesure de force (3) présentant au moins un élément d'absorption de force (25), l'au moins un élément d'absorption de force (25) étant fixé au dispositif de mesure de force au moyen d'au moins un premier dispositif de fixation, dans lequel l'au moins un logement d'échantillon (9) est respectivement conçu pour recevoir un échantillon, et dans lequel l'appareil de mesure de force (1) est conçu pour appliquer le paramètre d'essai au échantillon respectif au moyen d'un élément de transmission de force (27) de l'agencement de mesure de force (3) et/ou pour mesurer une force s'opposant au paramètre d'essai au moyen de l'élément d'absorption de force (25).

12. Procédé de mesure d'une force avec un agencement de mesure de force (3) selon l'une des revendications 1 à 10 ou un appareil de mesure de force selon la revendication 11, comprenant les étapes suivantes :
- Introduction d'un paramètre d'essai dans l'élément d'absorption de force (25) via la première et/ou la deuxième zone d'absorption de force (51),
- Application de l'échantillon au paramètre d'essai, et
- Détermination d'une force de résistance d'échantillon.

13. Procédé selon la revendication 12, **caractérisé en ce que** l'élément de transmission de force (27) pénètre au moins partiellement dans un volume intérieur d'échantillon, dans lequel un élément formant bouchon de d'échantillon est de préférence appliqué.

14. Procédé selon la revendication 12 ou 13, **caractérisé en ce que**, pour déterminer la force de résistance, on tient compte, du point de vue de la technique de commande, d'une force de gravité s'exerçant sur la deuxième zone d'absorption de force (51).

15. Pièce d'adaptation pour un agencement de mesure de force selon l'une des revendications 1 à 10 ou un appareil de mesure de force (1) selon la revendication 11, **caractérisée en ce que** la pièce d'adaptation est conçu comme deuxième pièce d'adaptation et deuxième dispositif de fixation pour l'agencement de mesure de force (3) et présente un aimant qui est conçu pour maintenir un élément de transmission de force (27) de l'agencement de mesure de force (3) sur une deuxième zone d'absorption de force de l'agencement de mesure de force (3).
